# EUROPEAN PATENT APPLICATION

(11) **EP 4 582 335 A1**
(43) Date of publication of application: **09.07.2025**
(21) Application number: 22953534.9
(22) Date of filing: 03.08.2022
(51) Int. Cl.: B62J 6/22, G01S 17/93

(54) **CONTROL SYSTEM APPLYING INTERNET OF THINGS SENSING TECHNOLOGY TO LOW-SPEED VEHICLE**

(71) Applicant: Sin Chang Hun Industry Co., Ltd, Taiwan (TW)
(72) Inventor: LI, Wei-husn, Zhangshu Changhua (TW)
(74) Representative: Lang, Christian
(86) International application number: PCT/CN2022/109939
(87) International publication number: WO 2024/026723

(57) **Abstract**

An Internet of Things (IoT) sensing technology for a control system of slow vehicles contains: a bicycle, a processing module, and a processing module. The bicycle includes multiple radar sensors respectively sending multiple microwave signals to sense objects surrounding a front, rear, left, and right directions of the bicycle, then the multiple radar sensors converting the microwave signals into data. The processing module arranged at the bicycle and includes a processor, a power supplier and a transmission module. The smart device is electrically connected with the processing module, the transmission module of the processing module is configured to send the data from the processor to the smart device, and the smart device includes a safety module configured to display the sensing distance among the objects and the bicycle to the user, thus enhancing a riding safety.

## Description

### TECHNICAL FIELD

The present invention relates to an IoT sensing technology, and more particularly to the IoT (Internet of Things) sensing technology for a control system of slow vehicles.

### BACKGROUND

As oil prices rise, more and more people are using bicycles as a means of transportation. However, most bicycles are not equipped with any warning devices, thus making it difficult to detect coming vehicles from behind. In addition, bicycle lanes are not popular at present, and bicycles often have to compete with cars and motorcycles for the road. Especially when riding a bicycle at night, if no warning lights are set, accidents are likely to occur due to poor visibility at night.

At present, bicycle warning accessories can only warn of vehicles coming from behind. Users themselves cannot detect vehicles coming from behind and must turn their heads to confirm the rear, at which time they cannot take into account the situation in front. Also, riders cannot learn the sensing distance between themselves and the surrounding vehicles, and sometimes vehicle collisions are caused by distraction on both sides.

The present invention has arisen to mitigate and/or obviate the aforedescribed disadvantages.

### SUMMARY

The primary aspect of the present invention is to provide an IoT (Internet of Things) sensing technology for a control system of slow vehicles which contains multiple radar sensors fixed on a bicycle to sense a sensing distance among the objects and the bicycle, then the sensing distance is converted, calculated and sent to the rider, thus reminding and warning the rider the coming car or obstacles to enhance a driving safety.

To obtain above-mentioned aspects, an Internet of Things (IoT) sensing technology for a control system of slow vehicles provided by the present invention contains: a bicycle, a processing module, and a processing module.

The bicycle includes multiple radar sensors respectively sending multiple microwave signals to sense objects surrounding a front, rear, left, and right directions of the bicycle, then the multiple radar sensors converting the microwave signals into data.

The processing module is arranged at a predetermined position of the bicycle, and the processing module includes a processor, a power supplier and a transmission module. The power supply device is configured to provide a power to the processor and the transmission module, the processor is electrically connected to the transmission module, the transmission module is electrically connected to each radar sensor, and the transmission module is configured to transmit the data generated by each radar sensor to the processor to execute a calculation of a sensing distance among the objects and the bicycle, then a result of the calculation of the processor is output by the transmission module.

The smart device is electrically connected with the processing module, and the transmission module of the processing module is configured to send the data from the processor to the smart device, and the smart device includes a safety module configured to display the sensing distance among the objects and the bicycle to the user, thus enhancing a riding safety.

The bicycle includes multiple warning lamps arranged on two handlebars and multiple predetermined positions of a front wheel fork and a rear wheel fork of the bicycle, and the multiple warning lamps are electrically connected with the processing module so that after the processing module judges the sensing distance among the objects and the bicycle is too close, the multiple warning lamps are driven by the processing module to flash lights.

The sensing distance of the multiple radar sensors is set to increase by using the safety module of the smart device.

The multiple radar sensors are a 24 GHz radar sensor.

Thereby, the multiple radar sensors are used to track surrounding objects (such as vehicles or objects) in front, behind, to the left and to the right of the bicycle. When surrounding objects approach, the multiple warning lamps and safety modules are used to alert riders and pedestrians, the obtaining the riding safety.

### BRIEF DESCRIPTION OF THE DRAWINGS

FIG. 1 is a schematic view of an IoT (Internet of Things) sensing technology for a control system of slow vehicles according to a preferred embodiment of the present invention.
FIG. 2 is a schematic view of the application of the processing module of the IoT sensing technology for the control system of slow vehicles according to the preferred embodiment of the present invention.
FIG. 3 is a schematic view of the operation of the smart device of the IoT sensing technology for the control system of the slow vehicles according to the preferred embodiment of the present invention.
FIG. 4 is a schematic view of the operation of the multiple radar sensors of the IoT sensing technology for the control system of the slow vehicles according to the preferred embodiment of the present invention.

### DETAILED DESCRIPTION

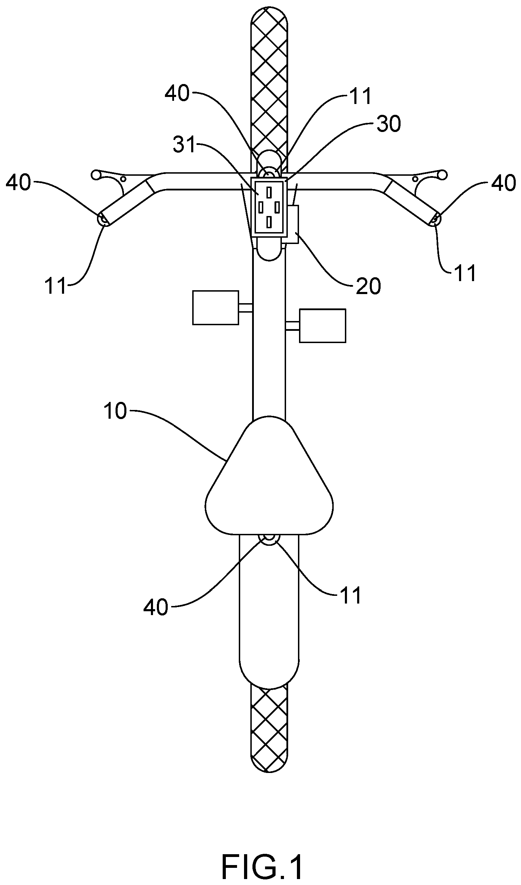

With reference to FIGS. 1-4, an Internet of Things (IoT) sensing technology for a control system of slow vehicles according to a preferred embodiment of the present invention comprises: a bicycle 10, a processing module 20, and a smart device 30.

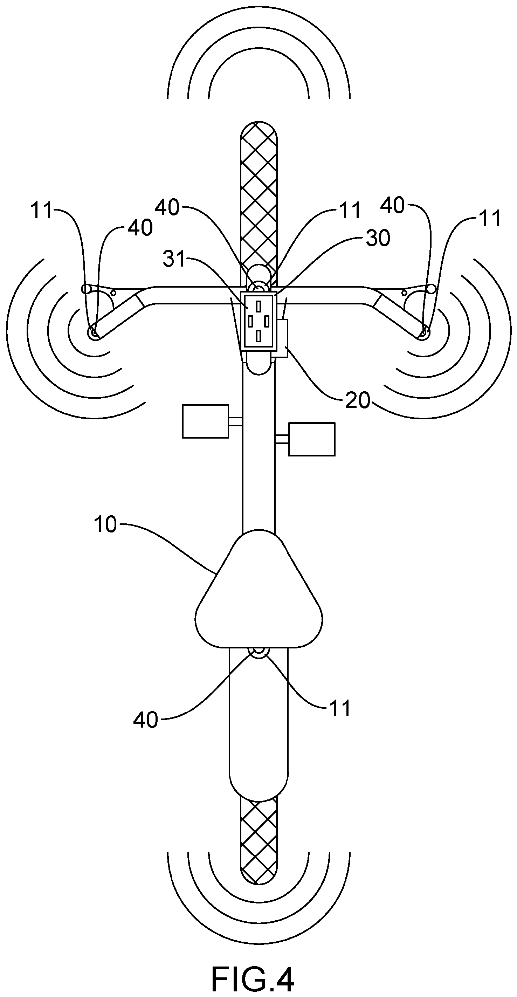

Referring to FIGS. 1 and 4, the bicycle 10 includes multiple radar sensors 40 which are fixed on a front, rear, left, and right positions of the bicycle 10 and respectively send multiple microwave signals to sense objects surrounding a front, rear, left, and right directions of the bicycle 10. Then, the multiple radar sensors 40 convert the microwave signals into data. The multiple radar sensors 40 are configured to detect still/moving objects (such as vehicles, pedestrians, or obstacles), wherein the multiple radar sensors 40 are a 24 GHz radar sensor and are configured to sense the objects and a moving speed, a still sensing distance, and an angle of the objects etc. Preferably, the multiple radar sensors 40 have a planar microstrip antenna, thus obtaining a small size, an easy integration, and a sensitive sensing.

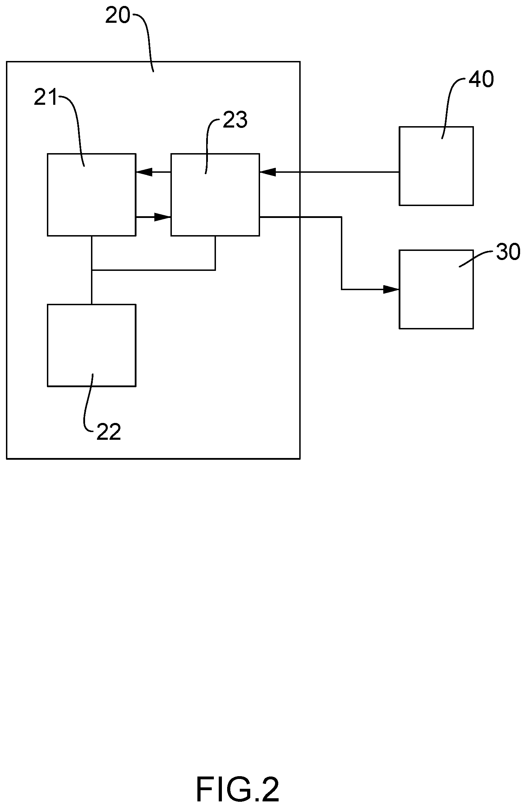

Referring to FIG. 2, the processing module 20 is arranged at a predetermined position of the bicycle 10, for example, the processing module 20 is arranged at a handlebar of the bicycle 10. The processing module 20 includes a processor 21, a power supplier 22 and a transmission module 23. The power supply device 22 is configured to provide a power to the processor 21 and the transmission module 23. The processor 21 is electrically connected to the transmission module 23, the transmission module 23 is electrically connected to each radar sensor 40, and the transmission module 23 is configured to transmit the data generated by each radar sensor 40 to the processor 21 to execute a calculation of a sensing distance among the objects and the bicycle 10, then a result of the calculation of the processor 21 is output by the transmission module 23. The processing module 20 is used with an open-source embedded hardware platform (such as Arduino, and Python, etc.) which is capable of downloading a large amount of data related to radar sensing from the Internet, thus obtaining an outstanding sensing effect of the multiple radar sensors 40 and eliminating noises.

Furthermore, the transmission module 23 is electrically connected with the radar sensor 40 by using a transmission wire or in a wireless transmitting manner so as to send the data from the multiple radar sensors 40 to the processor 21, such that the data are converted and analyzed by the processor 21 and are sent to the smart device 30.

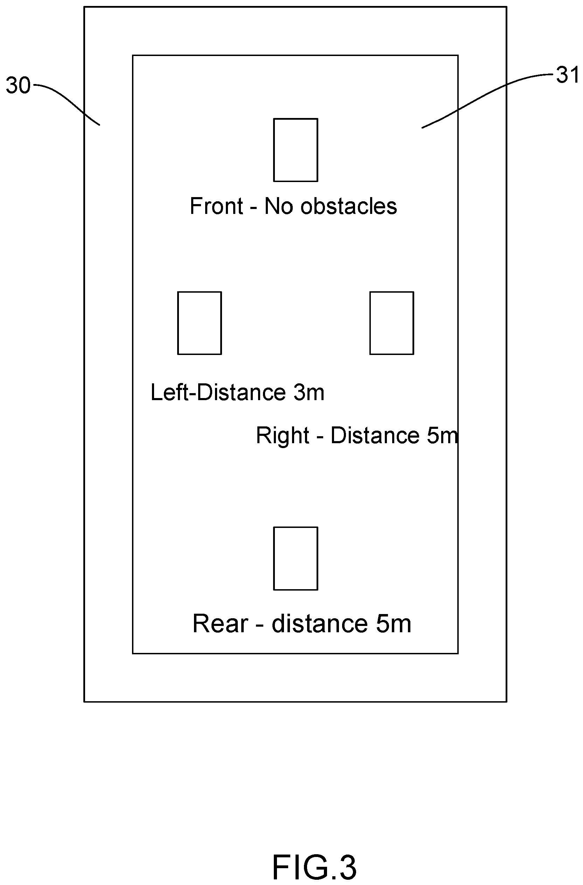

As shown in FIGS. 1 and 3, the smart device 30 is electrically connected with the processing module 20, wherein the transmission module 23 of the processing module 20 is configured to send the data from the processor 21 to the smart device 30, and the smart device 30 includes a safety module 31 configured to display the sensing distance among the objects and the bicycle 10 to the user, thus enhancing a riding safety.

As illustrated in FIGS. 1 and 4, the bicycle 10 includes multiple warning lamps 11 arranged on two handlebars and multiple predetermined positions of a front wheel fork and a rear wheel fork of the bicycle 10, wherein the multiple warning lamps 11 are electrically connected with the processing module 20 so that after the processing module 20 judges the sensing distance among the objects and the bicycle is too close, the multiple warning lamps 11 are driven by the processing module 20 to flash lights.

Accordingly, the IoT sensing technology of the present invention has advantages as follows:
1) As shown in FIG. 4, the sensing sensing distance of the multiple radar sensors 40 is set by using the processing module 20 (for example, the sensing distance is set to 5 meters or 10 meters), then when the objects are close to the bicycle 10 during riding the bicycle 10, the safety module 31 of the smart device 30 and the multiple warning lamps 11 remind the rider and the pedestrians to leave the bicycle away or to shrink the objects, thus obtaining the riding safety.
2) In some circumstances (for example, the bicycle is ride in a quick speed), the sensing distance of the multiple radar sensors 40 is set to increase by using the safety module 31 of the smart device 30. Alternatively, the sensing distance of the multiple radar sensors 40 is set to decrease by using the safety module 31 of the smart device 3 in a slow speed during riding the bicycle. Thereby, the sensing distance of the multiple radar sensors 40 is set based on using requirements.
3) The objects are detectable to avoid a blind spot to the rider, thus enhancing the riding safety. Also, when riding the bicycle in a narrow area, the safety module 31 and the multiple warning lights 11 guide the rider to avoid hitting the objects, such as a wall.
4) The IoT sensing technology is applicable for the bicycle or assistive devices equipment, such as wheelchairs, wheelchairs, or walkers to enhance a using safety.
5) When making a turn during riding the bicycle, the rider applies the IoT sensing technology so that the processing module 20 drives the multiple radar sensors 40 to detect the objects or a coming car, then the data is sent back to the processing module 20 from the multiple radar sensors 40, and the processing module 20 transmits warning messages to the safety module 31 of the smart device 30, thus enhancing the riding safety.

While the first embodiments of the invention have been set forth for the purpose of disclosure, modifications of the disclosed embodiments of the invention as well as other embodiments thereof may occur to those skilled in the art. The scope of the claims should not be limited by the first embodiments set forth in the examples, but should be given the broadest interpretation consistent with the description as a whole.

## Claims

1. An Internet of Things (IoT) sensing technology for a control system of slow vehicles comprising:
a bicycle including multiple radar sensors respectively sending multiple microwave signals to sense objects surrounding a front, rear, left, and right directions of the bicycle, then the multiple radar sensors converting the microwave signals into data;
a processing module arranged at a predetermined position of the bicycle, wherein the processing module includes a processor, a power supplier and a transmission module; the power supply device is configured to provide a power to the processor and the transmission module, the processor is electrically connected to the transmission module, the transmission module is electrically connected to each radar sensor, and the transmission module is configured to transmit the data generated by each radar sensor to the processor to execute a calculation of a sensing distance among the objects and the bicycle, then a result of the calculation of the processor is output by the transmission module; and
a smart device electrically connected with the processing module, wherein the transmission module of the processing module is configured to send the data from the processor to the smart device, and the smart device includes a safety module configured to display the sensing distance among the objects and the bicycle to the user, thus enhancing a riding safety.

2. The IoT sensing technology as claimed in claim 1, wherein the multiple radar sensors 40 are a 24 GHz radar sensor.
